Europäisches Patentamt

(19) European Patent Office

Office européen des brevets

(11) Publication number: **0 073 150**
**B1**

(12) **EUROPEAN PATENT SPECIFICATION**

(45) Date of publication of patent specification: **05.11.86**

(21) Application number: **82304407.8**

(22) Date of filing: **20.08.82**

(51) Int. Cl.⁴: **B 01 J 35/04,** B 01 J 15/00, B 01 J 12/00

(54) Catalyst devices.

(30) Priority: **20.08.81 GB 8125515**

(43) Date of publication of application:
**02.03.83 Bulletin 83/09**

(45) Publication of the grant of the patent:
**05.11.86 Bulletin 86/45**

(84) Designated Contracting States:
**AT BE CH DE FR IT LI NL SE**

(56) References cited:
**EP-A-0 041 814**
**WO-A-81/01250**
**FR-A-1 421 463**
**FR-A-2 204 453**
**GB-A-1 563 927**
**US-A-3 208 131**
**US-A-4 297 248**

(73) Proprietor: **UNITED KINGDOM ATOMIC ENERGY AUTHORITY**
**11 Charles II Street**
**London SW1Y 4QP (GB)**

(72) Inventor: **Wright, Christopher John**
**41 Oxford Road**
**Abingdon Oxfordshire (GB)**

(74) Representative: **Mansell, Keith Rodney**
**Patents Branch United Kingdom Atomic Energy Authority 11 Charles II Street**
**London SW1Y 4QP (GB)**

Courier Press, Leamington Spa, England.

## Description

This invention relates to a device for use in the catalysis of a chemical reaction comprising a container having a fluid inlet thereto, a fluid outlet therefrom and a plurality of discrete catalyst bodies assembled therein, each body carrying a surface coating comprising catalytically active material for the reaction, in operation of which, fluid passes in a general direction of flow through the container from the inlet to the outlet.

Catalyst devices comprising a plurality of catalyst pellets randomly assembled in a container are well-known in the art. See, for example, "Chemical and Catalytic Reaction Engineering" by J. J. Carberry, published by McGraw-Hill (1976). Also, UK Patent Specification GB—A—2 053 957 describes carrying out certain chemical reactions in the presence of a catalyst supported on a metal or alloy resistant to the conditions in which the reaction is carried out. The catalyst support may be in a container and in the form of small, random-packed honeycombs.

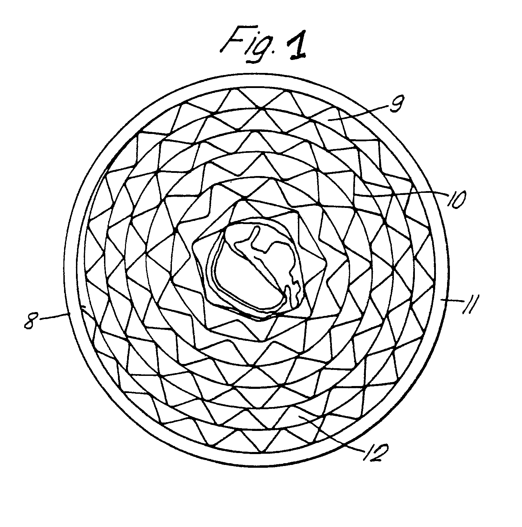

Further, WO—A—81 012 50 describes, *inter alia*, a catalytic converter comprising a canister having an inlet and outlet and a number of axially aligned, stationary catalytic cartridges contained therein. Such cartridges are described having the form of an aluminium honeycomb, e.g. comprising spirally wound alternating flat and corrugated sheets with colinear cells and having a tubular metal hoop or shell formed thereound. The cartridges are coated with a catalyst. In Figure 1 for example, a single train of such cartridges is shown occupying the cross-section of the canister.

There is always interest in improving the performance of catalyst devices and the invention as claimed is concerned with provision of catalyst bodies in certain ordered arrangement in catalyst devices thereby to attain improvement in performance.

The invention comprises a device for use in the catalysis of a chemical reaction comprising a container (1) having a fluid inlet thereto, a fluid outlet therefrom and a plurality of discrete catalyst bodies (8) assembled therein, each body (8) carrying a surface coating comprising catalytically active material for the reaction, having a plurality of internal channels (12) of an ordered, predetermined size and arrangement to permit substantially unrestricted flow of fluid therethrough, and having an external protective boundary (11) to protect the body (8) from attrition, in operation of which device, fluid passes in a general direction of flow (a and b) through the container (1) from the inlet to the outlet, characterised in that the bodies (8) are in a predetermined orientation in the container (1) comprising more than one train assembled substantially parallel to one another and to the principal axis of the container (1) and occupying the cross-section of the container (1), each train and said channels (12) of each body (8) being aligned with said general direction of flow (a and b) to define pathways for fluid to pass therethrough in said general direction (a and b).

The channels in the bodies of the invention may be substantially parallel with respect to one another and, in the case of a cylindrical body, may be parallel with respect to the principal axis of the cylinder. Other arrangements of channels may be possible, dependent upon manufacturing feasibility and the requirements of the device.

In operation of the device, a fluid reactant or reactants are passed via the fluid inlet into the container. The reactant or reactants pass through the channels in the bodies thereby contacting the catalytically active material which catalyses the chemical reaction. The fluid product or products of the reaction leave the container via the fluid outlet. The general direction of flow of fluid through the container may be downward or in any other direction as appropriate.

The device of this invention has a practical advantage that it may be put into effect by employing known and possibly existing forms of container for catalyst bodies, such as elongated tubes, cylinders, spheres, cones or drums. Both radial and axial catalytic converters may be used. The catalyst bodies employed in the invention may be fabricated with dimensions appropriate for use in known containers. They may be placed into a container in such a manner that either initially, or after a period of time, they adopt the abovementioned predetermined orientation. Devices of the invention do not suffer from serious attrition problems since catalytically active material carried by the walls defining the channels of a particular catalyst body is protected from contact with any other catalyst body in the device, i.e., a significant part of the surface area of the catalyst body lies within a mechanically hard and resistant protective external boundary and is thus protected from attrition.

By "fluid" in this specification is meant fluid containing or consisting of either the reactant or reactants for the reaction to be catalysed or the product or products of such reaction depending upon the context. The fluid may be a gas or a vapour or a liquid.

The catalyst bodies in a particular device of the invention may have substantially similar internal dimensions, e.g. in terms of size, density and/or arrangement of channels. In some applications, however, a device of the invention contains catalyst bodies which are not all of the same internal dimensions. In this way catalytic efficiency may be enhanced by providing greater opportunity for reactants passing through the device to contact catalytically active material. Also, such variation of the internal dimensions of the catalyst bodies of a device may allow reactivity in different parts of the device to be controlled thereby allowing more precise control of temperature profiles to be effected.

By plurality of catalyst bodies in a device of the invention is meant a number such that the catalytic efficiency of the device is greater than that of a device of the same dimensions having a single catalyst body packed in the container, wherein the single body occupies the same proportion of the volume of the device as the catalyst bodies in the device of the invention, has the same internal channel size and arrangement as said bodies and has the same surface coating as said bodies.

The requirement in the invention as claimed for the catalyst bodies to "occupy" the cross-section of the container is to minimise the incidence of a fluid reactant or reactants "by-passing" the catalytically active material. The internal walls of the container may, however, also carry a surface coating comprising catalytically active material in order to further minimise "by-passing".

Where it is desired to minimise contact between the container and the bodies, spacers may be provided, for example mounted either on the container or on the bodies.

The bodies may be assembled in orientations such that a number of trains pass through any cross section of the container chosen to be perpendicular to the general direction of fluid flow at that point.

Mass transfer in the device may be enhanced by using catalyst bodies of short length. The invention is not, however, limited to devices where each catalyst body is in close or touching contact with the next adjacent catalyst body or bodies. Thus, it may be necessary in some circumstances to control thermal gradients by causing each body to be separated from the next adjacent body or bodies. The word "train" must therefore be construed accordingly. It is further pointed out that "train" should not be taken to imply that each body is necessarily in a fixed connection with the next adjacent body or bodies. "Train" is used merely to indicate the relative spatial disposition of the bodies. "Aligned with" does not necessarily mean that the trains are precisely in line with the general direction of flow. Thus, some angular deviation from precise alignment is possible in the invention as will be illustrated hereinafter. In essence the greates directional component of each train is aligned with the general direction of flow. Also the trains may be branched within the above constraints. The trains may, for example, be substantially parallel to one another.

It should be noted that not all of the bodies in the container need necessarily be members of the trains. Thus, a proportion thereof may be present in random arrangement without significantly affecting the catalytic performance of the device.

The bodies may be placed in the container individually or they may be placed therein as preformed trains, where, for example the bodies are fastened together to constitute the trains.

Catalyst bodies for use in this invention having a plurality of channels in substantially parallel arrangement with respect to one another may, for example, have from 400 to 4 channels per square centimeter of the portion of the body at right angles to the direction of the channels. Preferably, there are from 200 to 25 such channels per square centimetre in oder to maximise surface area and minimise the risk of blockage of the channels when the device is in use.

The principal axis of the container is preferably linear through other container geometries are possible in the practice of the invention. For example, the principal axis of the container may follow an arcuate path, at least in part.

There are a number of advantages in employing the present invention, rather than randomly packing bodies (e.g. of honeycomb form) into a container. The first is that the pressure drop along the container can be considerably reduced if the contents of the container comprise a substantial number of trains aligned with the general direction of the gas flow. A second is that the catalytic activity of the bodies in the reactant fluid can be enhanced if there is this same alignment of trains with the general direction of the fluid flow.

One explanation for these phenomena is that the reactant fluid is more able to pass through the centres of the catalyst bodies if they are aligned with the general direction of the gas glow. Thus, more catalytic surface per unit volume of the device is exposed to the reactants, and a higher catalytic activity per catalyst body is obtained.

Another significant advantage is that the voidage in the container can be significantly reduced by non-random packing of bodies into a container. The voidage is the percentage of volume not occupied by individual catalyst bodies, where the volume of an individual body includes all the volume within the external boundary of the body. Consequently the volume of the channels within a single body is included in the volume of the body for the calculation of voidage.

Unnecessary voidage will lead to an increase in the volume of the device needed to bring about a certain degree of conversion of reactants to products. Alternatively, in some cases, advantages can be taken of the possibility of obtaining a higher degree of conversion from a larger number of bodies contained within the same volume. In addition the presence of unwanted voidage may increase the proportion of reactants to unwanted by-products due to a modification in the ratio of homogeneous to heterogeneous reactions which can occur in the container.

The present invention has application in the catalysis of those processes whose efficiencies are impaired by high pressure drops. Such processes include those highly exothermic or endothermic reactions which are or can be carried out in tubular containers. Other such processes include those in which the rate of reaction is partially controlled by diffusion into the catalyst. In these reactions, a compromise is often reached between the advantage gained in using small catalyst bodies and the disadvantages of the accompanying rise in pressure drop. The invention has also application for those reactions where pressure drop is a problem due to the accumulation of solid particles within the voidage of the container either because of catalyst pellet degradation or because of deposition or decomposition within the voidage of some fraction of the fluid entering the container.

Examples of processes which fall into one or more of these categories include the steam reforming of hydrocarbons, methanation, the selective and complete oxidation of hydrocarbons, the oxidation of sulphur dioxide to sulphur trioxide, the oxidation of ammonia, hydrodesulphurisation processes, methanol synthesis and the water-gas shift reaction.

The catalyst bodies may be made of a ceramic material or of a metal. Examples of suitable ceramic materials are mullite, cordierite, silicon carbide, silicon nitride and zirconia. Examples of suitable metals are aluminium bearing iron base alloys, aluminium, stainless steels and high Ni content steels. An example of an aluminium bearing iron base alloy has a composition by weight of 10 to 30% Cr, 1 to 10% Al, 0 to 0.5% C, and the balance Fe. Such alloys are available in the UK under the UK Registered Trade Mark "FECRALLOY".

Where resistance to high temperature embrittlement is important such alloys are made within the specification of a composition by weight of up to 20% Cr, 1 to 10% Al, 0.1 to 3.0% Y and the balance Fe. Where a degree of high temperature embrittlement can be tolerated, higher chromium content up to 25% by weight may be employed. The particularly preferred composition is a FECRALLOY (Registered Trade Mark) alloy having 15.50 to 16.50% Cr, 4.6 to 5.6% Al, 0.3 to 1.0% Y and the balance Fe.

The above mentioned alloys may include additions of Co and/or Ni and it is envisaged that such inclusions should be limited to the range 0 to 3% by weight of each element. However, acceptable performance may be achieved with these additions in the range 0 to 5% Co, and 0 to 5% Ni.

An alternative alloy is that sold under the UK Registered Trade Mark KANTHAL DSD. A typical example of such an alloy has an approximate composition by weight of 22.5% Cr, 4.5% Al, 2.0% Co. 0.1% C and the balance Fe.

A catalyst body of ceramic material for use in the invention may be fabricated by methods known in the art and may, for example, be fabricated with a honeycomb structure for use in the invention. A catalyst body of metal for use in the invention may be fabricated, at least in part, of corrugated metal defining the channels through the body. For example, a metal catalyst body for use in the invention may comprise spirally wound alternate plain and corrugated sheets wound in 'Swiss-roll' type fashion. Such a body may be held together by any suitable externally applied fastening means such as wire, a split ring or a washer, or by welding. Spot or line welding are preferred since they effect a permanent fastening and do not substantially disturb the profile of the bodies. This enables the bodies to fit tightly into the container thereby minimising generation of 'dead' volume in the device.

The surface coating on the catalyst bodies may comprise one or more transition metal elements or a compound thereof as the catalytically active material, for example the metals Fe, Co, Ni, Ru, Rh, Pd, Os, Ir, Pt, Cu, Ag, Au and the oxides and mixed oxides of V, Cr, Mo, W and Mn. The choice of catalytically active material is in practice determined to a large extent by the reaction to be treated by catalysis. Preferably, the catalytically active material is supported by a ceramic coating, for example, a refractory oxide coating such as $Al_2O_3$, $CeO_2$, $Y_2O_3$, $TiO_2$, $ZrO_2$, $ThO_2$ and $SiO_2$. Such coatings may be applied by methods known in the art, for example, as described UK Patent Specification GB—A—1 568 861.

In the production of the catalyst bodies, catalytically active material may be applied by methods known in the art, for example by solution impregnation followed by decomposition, sputtering, plasma coating, flame spraying, vapour deposition or sintering.

In a further aspect the invention provides a method of catalysis of a chemical reaction which comprises passing a reactant or reactants for the reaction through a device according to the invention under conditions for the catalytically active material to effect catalysis of the reaction.

Several ways of carrying out the invention will now be described, by way of example only, as follows where reference will be made to Figures 1 to 6 of the accompanying drawings wherein

Figure 1 is an enlarged sectional view of a catalyst body suitable for use in the devices shown in Figures 2 to 5 below;

Figures 2 to 5 are schematic side views of catalyst devices for the catalysis of chemical reactions involving fluids showing various orientations of catalyst bodies; and

Figure 6 is a graph showing the relationship between pressure drop and flow rate for a catalyst device of the invention and for catalyst devices not forming part of the invention.

Referring to Figure 1, a catalyst body 8 comprises alternate plain sheets 9 and corrugated sheets 10 spirally wound in a coil in 'Swiss-roll' type fashion. Each of the sheets 9 and 10 is fabricated of metal. The outer plain sheet 11 constitutes an external protective body. The coil is prevented from unwinding by means of a weld (not shown). The sheets 9 and 10 define a plurality of passageways 12 extending through the catalyst body 8. The sheets 9 and 10 each carry a layer of a carrier material (not shown), which in turn carries a layer of a catalytically active material (not shown).

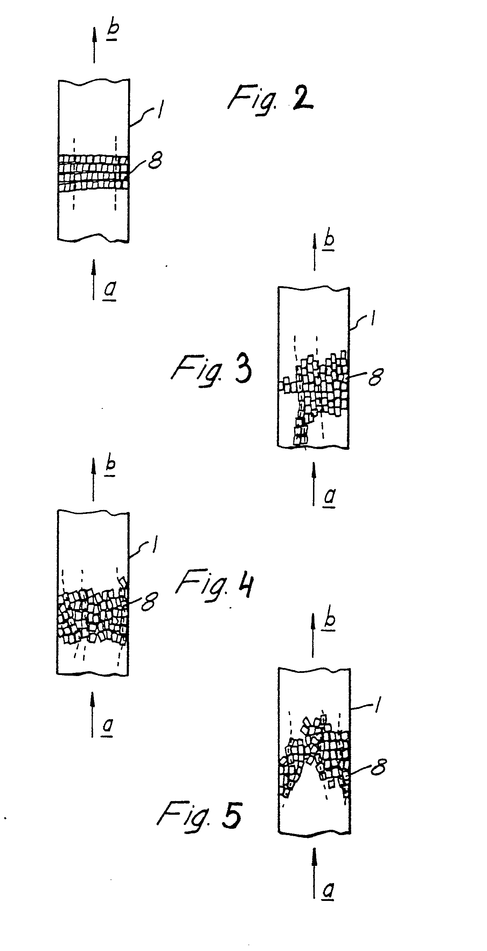

Referring to Figures 2 to 5, each of the figures shows a cylindrical container 1 which carries inlet and outlet pipes (not shown). Each container 1 carries a plurality of catalyst bodies 8 as shown in Figure 1. Only a representative sample of the bodies 8 are shown in the figures. The catalyst bodies 8 are assembled in an orientation comprising trains thereof. The alignment of some of the trains is indicated in representative cases by dotted lines and each train defines pathways for fluid in the direction of the dotted lines.

In operation of each of the devices shown in Figures 2 to 5, fluid reactants are passed via the inlet pipe (not shown) into the container 1 in the direction shown by the arrow a. The reactants pass through the trains and hence through the passageways 12 in the catalyst bodies 8 thereby contacting the catalytically active material (not shown) which catalyses a chemical reaction in the reactants. A product of the chemical reaction issues from the container 1 via the outlet pipe (not shown) in the direction shown by the arrow b. The arrows a and b indicate the general direction of flow of fluid through the container 1. Thus, the trains are aligned with said general direction of flow.

In the examples below, Examples 1 and 2 are examples of the invention and Examples A, B, C and D are comparative examples and are not examples of the invention.

Example 1

A cylindrical container (length 9 cm, diameter 6.5 cm) was packed with 480 cylindrical bodies (length 0.9 cm diameter, 0.85 cm depth of corrugations 1 mm) of the type shown in Figure 1 herein and fabricated of "FECRALLOY" steel. The bodies were packed wholly in the form of the linear trains aligned with the principal axis of the container and substantially parallel to one another. Measurements were made of the voidage (dead space) in the container as a fraction of the total volume of the container and of the pressure drop as a function of air flow rate through the container in the general direction of the principal axis of the container.

Example A

The procedure of Example 1 was repeated with the exception that the catalyst bodies were randomly packed in the container.

Example B

The procedure of Example 1 was repeated with the exception that the catalyst bodies were randomly packed in the container and then vibrated.

Example C

The procedure of Example 1 was repeated with the exception that the catalyst bodies were packed in the container in the form of trains, none of which was aligned with the principal axis of the container.

The voidage results are depicted below

| Example | Voidage (fraction) |
|---------|--------------------|
| 1 | 0.18 |
| A | 0.33 |
| B | 0.32 |
| C | 0.32 |

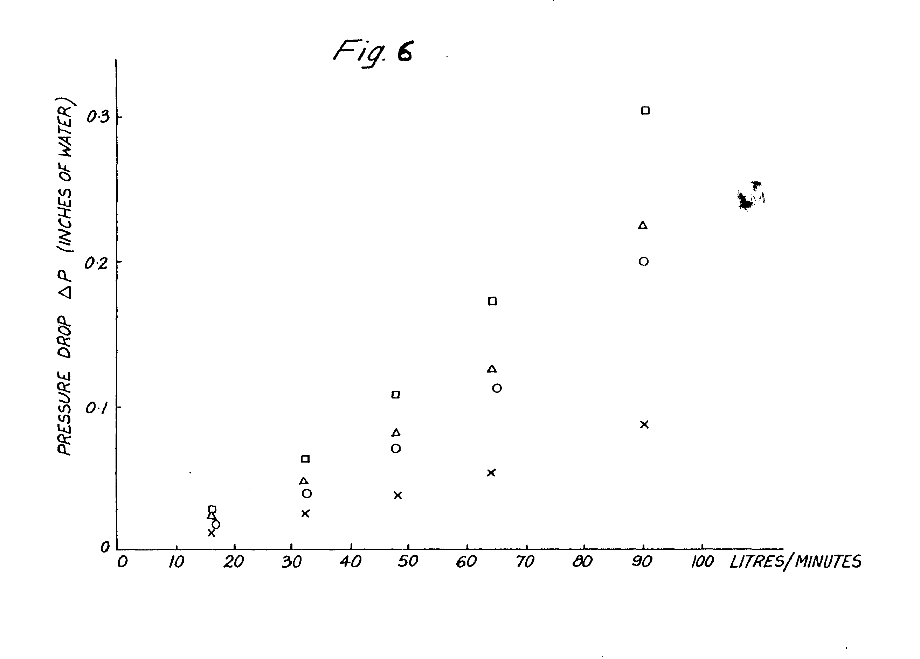

and the pressure drop results are depicted in tha graph in Figure 6 where the quantities measured along the axes and their units are indicated on the graph. The symbols on the graph represent values obtained for the devices of the above examples as follows:

x: Example 1, Δ: Example A, O: Example B and □: Example C. It is seen that the device of Example 1 permits a much higher air flow rate for a given pressure drop than the devices of Example A, B and C.

Example D

480 catalyst bodies as used in Example 1 were coated with a nickel-alumina washcoat containing 616 gms/l (Ni(NO$_3$)$_2$.6H$_2$O and 220 gms/l Al$_2$O$_3$. The coated bodies were dried and then fired in air for 15 minutes at 450°C. After firing, the mass of the washcoat amount to 12.7% of the original mass of the bodies. The bodies were then reduced in hydrogen at 550°C for thirty minutes before they were randomly loaded into a container of 6.5 cms internal diameter to form a bed. A further reduction was then carried out at 250°C. During activity measurements, gas was fed to the container at a total flow rate of 50 l/min, with a composition of 16N$_2$: 1 CO: 3H$_2$ (H.S.V.=9090 h$^{-1}$). The gas was preheated so that in the absence of carbon monoxide, the centre of the bed reached a temperature of 224°C.

Example 2

After the activity of the catalyst bodies in Example D had been measured, they were withdrawn from the container and then reloaded so that their internal channels were completely aligned with the general direction of the gas flow therethrough. The catalyst bodies were reduced in precisely the same manner as described in Example D prior to measurement of activity as described in that example.

The percentage of methane in the effluent gas from the container carrying aligned catalyst bodies was found to be twice that from the container carrying randomly packed catalyst bodies. This shows the greater effectiveness of an ordered array compared with a randomly packed array of catalyst bodies. It is expected that the ratio of activities for ordered and randomly packed arrays will depend upon space velocity, catalyst body diameter to length ratio and overall catalyst body dimensions.

It is possible that the greater activity of the ordered array arises from the enhanced penetration of the internal channels of each catalyst body by the reacting gases.

**Claims**

1. A device for use in the catalysis of a chemical reaction comprising a container (1) having a fluid inlet thereto, a fluid outlet therefrom and a plurality of discrete catalyst bodies (8) assembled therein, each body (8) carrying a surface coating comprising catalytically active material for the reaction, having a plurality of internal channels (12) of an ordered, predetermined size and arrangement to permit substantially unrestricted flow of fluid therethrough, and having an external protective boundary (11) to protect the body (8) from attrition, in operation of which device, fluid passes in a general direction of flow (a and b) through the container (1) from the inlet to the outlet, characterised in that the bodies (8) are in a predetermined orientation in the container (1) comprising more than one train assembled substantially parallel to one another and to the principal axis of the container (1) and occupying the cross-section of the container (1), each train and said channels (12) of each body (8) being aligned with said general direction of flow (a and b) to define pathways for fluid to pass therethrough in said general direction (a and b).

2. A device as claimed in claim 1 wherein each catalyst body (8) has a plurality of channels in substantially parallel arrangement with respect to one another and has from 400 to 4 channels (12) per square centimetre of the portion of the body (8) at right angles to the direction of the channels (8).

3. A device as claimed in claim 2 wherein each body (8) has from 200 to 25 channels (12) per square centimetre.

4. A device as claimed in any of the preceding claims wherein the catalyst bodies (8) are fabricated of metal in the form of spirally wound alternate plain sheets (9) and corrugated sheets (10).

5. A device as claimed in claim 4 wherein the metal is an aluminium bearing iron base alloy.

6. A method of catalysis of a chemical reaction comprising passing a reactant or reactants for the reaction through a device comprising catalyst bodies assembled in a container, characterised in that the device is a device as claimed in any of the preceding claims.

**Patentansprüche**

1. Vorrichtung zur Verwendung in der Katalyse einer chemischen Reaktion, mit einem Behälter (1), der einen Strömungsmitteleinlaß hierzu, einen Strömungsmittelauslaß hiervon und mehrere hierin zusammengesetzte, diskrete Katalysatorkörper (8) aufweist, wobei jeder Körper (8) eine Oberflächenbeschichtung trägt, die katalytisch aktives Material für die Reaktion aufweist, mehrere Innenkanäle (12) in einer geordneten, vorbestimmten Größe und Anordnung aufweist, um die im wesentlichen unbehinderte Strömungsmittelströmung hierdurch zu gestatten, und eine äußere Schutzumgrenzung (11) aufweist, um den Körper (8) gegenüber dem Abrieb zu schützen, und wobei im Betrieb dieser Vorrichtung Strömungsmittel in einer allgemeinen Strömungsrichtung (a und b) durch den Behälter (1) vom Einlaß zum Auslaß hindurchtritt, dadurch gekennzeichnet, daß die Körper (8) in einer bestimmten Orientierung im Behälter (1) vorliegen, mit mehr als einer Reihe, die im wesentlichen parallel zueinander und zur Hauptachse des Behälters (1) zusammengesetzt sind und den Querschnitt des Behälters (1) einnehmen, wobei jede Reihe und die Kanäle (12) eines jeden Körpers (8) auf die allgemeine Strömungsrichtung (a und b) ausgerichtet sind, um Wege für Strömungsmittel zu bilden, damit dieses hierdurch in der genannten allgemeinen Richtung (a und b) hindurchtritt.

2. Vorrichtung nach Anspruch 1, worin jeder Katalysatorkörper (8) mehrere Kanäle in im wesentlichen paralleler Anordnung in Bezug aufeinander aufweist und von 400 bis 4 Kanäle (12) pro cm² des Anteils des Körpers (8) rechtwinklig zur Richtung der Kanäle (8) aufweist.

3. Vorrichtung nach Anspruch 2, worin jeder Körper (8) von 200 bis 25 Kanäle (12) pro cm² aufweist.

4. Vorrichtung nach jedem der vorangehenden Ansprüche, worin die Katalysatorkörper (8) aus Metall in Form spiralig gewickelter alternierender glatter Bleche (9) und gewellter Bleche (10) hergestellt sind.

5. Vorrichtung nach Anspruch 4, worin das Metall eine Aluminiumhaltige Eisenlegierung ist.

6. Verfahren zur Katalyse einer chemischen Reaktion, mit Durchleiten eines oder mehrerer Reaktionsteilnehmer für die Reaktion durch eine Vorrichtung, die Katalysatorkörper aufweist, die in einem Behälter zusammengesetzt sind, dadurch gekennzeichnet, daß die Vorrichtung eine solche Vorrichtung ist, wie sie in jedem der vorangeheden Ansprüche beansprucht ist.

**Revendications**

1. Dispositif destiné à être utilisé pour la catalyse d'une réaction chimique, comprenant un récipient (1) ayant une entrée de fluide, une sortie de fluide et plusieurs corps catalytiques séparés (8) assemblés à l'intérieur, chaque corps (8) portant un revêtement superficiel comprenant un matériau catalytiquement actif vis-à-vis de la réaction, ayant plusieurs canaux internes (12) d'arrangements et de dimensions prédéterminés et ordonnés, destinés à permettre un écoulement pratiquement libre du fluide à l'intérieure et ayant une limite protectrice externe (11) destinée à protéger le corps (8) contre l'usure par frottement, le fluide circulant, pendant le fonctionnement du dispositif, dans une direction générale d'écoulement (a et b) dans le récipient (1) de l'entrée à la sortie, caractérisé en ce que les corps (8) ont une orientation prédéterminée dans le récipient (1) qui comprend plusieurs trains assemblés de manière qu'ils soient sensiblement parallèles les uns aux autres et à l'axe principal du récipient (1) et occupant la section du récipient (1), chaque train et les canaux (12) de chaque corps (8) étant alignés sur la direction générale d'écoulement (a et b) afin que les trajets de circulation du fluide soient délimités et que le fluide circule dans ladite direction générale (a et b).

2. Dispositif selon la revendication 1, dans lequel chaque corps catalytique (8) a plusieurs canaux formant un arrangement, sensiblement parallèles les uns aux autres et a de 400 à canaux (12) par centimètre carré de partie du corps (8) perpendiculaire à la direction des canaux (8).

3. Dispositif selon la revendication 2, dans lequel chaque corps (8) a de 200 à 25 canaux (12) par centimètre carré.

4. Dispositif selon l'une quelconque des revendications précédentes, dans lequel les corps catalytiques (8) sont fabriqués en un métal sous forme de feuilles plates (9) et de feuilles ondulées (10) quu alternent et qui sont enroulées en spirale.

5. Dispositif selon la revendication 4, dans lequel le métal est un alliage à base de fer contenant de l'aluminium.

6. Procédé de catalyse d'une réaction chimique, comprenant la circulation d'un ou plusieurs réactifs participant à la réaction dans un dispositif contenant des corps catalytiques assemblés dans un récipient, caractérisé en ce que le dispositif est un dispositif selon l'une quelconque des revendications précédentes.

# Fig. 1

Fig. 2

Fig. 3

Fig. 4

Fig. 5

Fig. 6